# EUROPÄISCHE PATENTSCHRIFT

(11) **EP 3 773 321 B1**
(45) Veröffentlichungstag und Bekanntmachung des Hinweises auf die Patenterteilung: **04.09.2024**
(21) Anmeldenummer: 19706424.9
(22) Anmeldetag: 13.02.2019
(51) Int. Cl.: A61C 7/14, A61C 7/28

(54) **KIEFERORTHOPÄDISCHE BEHANDLUNGSAPPARATUR**
ORTHODONTIC TREATMENT APPARATUS
APPAREIL DE TRAITEMENT ORTHODONTIQUE

(30) Priorität: 11.04.2018 CH 4592018
(43) Veröffentlichungstag der Anmeldung: 17.02.2021
(73) Patentinhaber: Von Mandach, Christoph, 5225 Bözberg (CH)
(72) Erfinder: Von Mandach, Christoph, 5225 Bözberg (CH)
(74) Vertreter: Keller Schneider Patent- und Markenanwälte AG
(86) Internationale Anmeldenummer: PCT/EP2019/053473
(87) Internationale Veröffentlichungsnummer: WO 2019/197069

(56) Entgegenhaltungen:
- WO-A1-2015/140026
- WO-A1-2015/140026
- JP-A- S61 228 847
- JP-A- S61 228 847
- US-A- 2 759 265
- US-A- 2 759 265
- US-A1- 2017 086 948
- US-B1- 9 844 422
- US-B1- 9 844 422

## Beschreibung

### Technisches Gebiet

Die Erfindung betrifft eine kieferorthopädische Behandlungseinrichtung umfassend ein am Kiefer eines Patienten befestigbares Aufnahmeelement zur Aufnahme mindestens eines Drahtbogenabschnittes von mindestens einem kieferorthopädischen Drahtbogen und ein Sicherungselement zur Sicherung des mindestens einen kieferorthopädischen Drahtbogens im Aufnahmeelement und eine Behandlungsapparatur umfassend mehrere Behandlungseinrichtungen und mindestens einen Drahtbogen.

### Technischer Hintergrund

Kieferorthopädische Brackets, welche zur Korrektur von Zahnstellungen auf den Zähnen befestigt werden, sind auf dem Markt in einer sehr grossen Vielfalt erhältlich. Sie weisen einen sogenannten Slot auf, in welchem ein Drahtbogen in eingesetzten Zustand mittels einer Klappe, mittels eines vertikal verschiebbaren Tors oder mittels Ligaturen gehalten ist.

Um die gewünschte korrigierende Bewegung der Zähne zu erzielen, muss der Drahtbogen so geformt werden, dass die Zähne in die gewünschte Richtung gezogen oder gedrückt werden.

Eine gute Funktion und gleichzeitig eine gute Ästhetik des Gebisses besteht dann, wenn die Zähne in ihrer individuellen Ausrichtung harmonisch zu einander stehen. Deren Ausrichtung wird aufgeteilt in eine erste Ordnung, die sich auf den Verlauf des Zahnbogens bezieht, bzw. auf eine ideale Linie, die die Zähne aussen berührt. Dazu gehört auch die Rotation des Zahnes bezüglich dieser Linie. Die Ausrichtung bezüglich der Seitansicht wird der zweiten Ordnung zugerechnet und als Kippung oder Angulation bezeichnet. Die Ausrichtung der Zähne quer zum Bogen-Verlauf, ist die dritte Ordnung und wird als bukkolinguale Inklination oder Torque bezeichnet. Die genaue Einstellung der Zahnreihen mit Drähten und Universalbrackets, die für alle Zähne identisch sind, ist sehr anspruchsvoll. Zur Vereinfachung der Behandlung kamen seit 1970 Sets von 28 unterschiedlichen Brackets auf den Markt, die jedem Zahn ein eigenes Bracket zuordnen. Sie haben in der Zwischenzeit die Universalbrackets weitgehend verdrängt. Die Sets basieren auf klinischwissenschaftlichen Untersuchungen idealer Zahnbogen und der Schaffung von Normen, die als Prescriptions bekannt sind. Sie ordnen den einzelnen Brackets einen Torque-, einen Angulations- und einen In/Out-Wert zu, der die Ausrichtung des Slots gegenüber der Basis angibt, die als Klebefläche auf dem Zahn dient. Diese nach einer Norm gefertigten Brackets sind nicht auf das Individuum abgestimmt und bieten daher keine Gewähr, dass ihre Einstellungen der Zähne schliesslich den Wünschen des Patienten und des Behandlers entsprechen. Die Prescriptions haben die Arbeit am Patienten insgesamt vereinfacht, aber dafür den Aufwand für die Hersteller ganz beachtlich erhöht. Jeder Brackettyp muss nach mindestens einer Prescription mit unterschiedlichen Slotausrichtungen gefertigt werden und einmal als ganzes Set und einmal als Reihe identischer Teile angeboten werden, zumal Verluste und Defekte von Brackets im Bereich von 5% als normal gelten. 1955 kam zum damals üblichen Slot mit der Dimension .022 inch x .028 inch neu das .018 inch x .022 inch Slot hinzu. Daher müssen die Brackets stets in zwei Ausführungen angeboten werden. Der grosse technische Aufwand ist von Auge nicht oder kaum zu erkennen und die Unterscheidung der verschiedenen Brackets nur dank zusätzlich angebrachten Markierungen möglich. Bei Brackets aus Glas und Keramik (Hybridkeramik) ist die Identifikation bekanntermassen problematisch. Das beinhaltet eine bedenkliche Anfälligkeit für Vertauschungen und falsche Platzierungen. Damit die Behandler bei der Vielzahl von Brackets noch den Überblick behalten können, muss in den Katalogen ein und dasselbe Bracket unter verschiedenen Bezeichnungen und Nummern aufgeführt werden. Als Folge davon haben einzelne Brackettypen bis zu 300 Bestellpositionen.

Um die beschriebenen Probleme zu vermeiden, wurden seit dem Jahr 2000 Verfahren entwickelt, die die Torque-, Angulations- und In/Out-Werte individuell für jeden einzelnen Patienten berücksichtigen, bzw. berechnen, um die einzelnen Brackets daraufhin individuell platzieren (z.B. Orthorobot) oder sogar individuell herstellen (z.B. Incognito, Insignia, Win) zu können. Zu diesen Verfahren gehören auch die Herstellung von Übertragungshilfen zum Einbringen der Brackets in den Mund des Patienten und das Vorbiegen der Drähte für die ganze Behandlung mittels CAD/CAM und Roboter. Das Ziel dieser Verfahren ist die Vereinfachung der Behandlungen, die Kürzung der Behandlungsdauer und die Reduktion der Arbeitszeit während den Kontrollen. Die Evidenz dieser Verfahren ist noch nicht generell bewiesen, sondern nur bei der sehr umständlichen Lingualbehandlung, wo die Brackets aus ästhetischen Gründen auf der Innenseite der Zähne geklebt werden.

WO2015140026 vom selben Anmelder beschreibt ein kieferorthopädisches Bracket, welches eine Basisplatte zur Befestigung des Brackets auf einem Zahn, eine gingivale Aufnahmetasche und eine okklusale Aufnahmekanal umfasst. Der okklusale Aufnahmekanal bildet ein Scharnierlager für eine über die Basisplatte schwenkbare Klappe aus. Ein auswechselbares Einsetzteil ist mit der gingivalen Aufnahmetasche und dem okklusalen Aufnahmekanal in Eingriff bringbar. Auf der von der Basisplatte abgewandten Seite des Einsetzteils sind zwei einen rechten Winkel einschliessende Drahtbogenführungsflächen eingeformt, zwischen welche ein Drahtbogen mit rechteckigem Querschnitt - ein sogenannter Flachdraht - einlegbar ist. Dieser Flachdraht ist im eingelegten Zustand mittels der schwenkbaren Klappe am Einsetzteil resp. am Bracket gehalten. Vorteilhaft ist, dass über das auswechselbare Einsetzteil ein Torque-Wert individuell eingestellt werden kann, ohne dass das am Zahn befestigte Bracket ausgetauscht werden muss. Die Lösung hat jedoch den Nachteil, das der mögliche Winkelbereich der Führungsflächen beschränkt ist. Zudem sind weitere Elemente zur Befestigung des Drahtbogen notwendig.

### Darstellung der Erfindung

Eine Aufgabe der Erfindung ist es, eine kieferorthopädische Behandlungseinrichtung und eine kieferorthopädische Behandlungsapparatur anzugeben, welche einfach im Aufbau ist und vom Behandler leichter und effizienter einsetzbar ist. Eine weitere Aufgabe liegt darin, die Feinjustierung von Inklination und Angulation gegenüber herkömmlichen Verfahren zu erleichtern und auch präziser zu machen. Diese Aufgabe wird durch eine kieferorthopädische Behandlungseinrichtung mit den Merkmalen des Anspruch 1 gelöst.

Die kieferorthopädische Behandlungseinrichtung umfasst ein im Kiefer eines Patienten befestigbares Aufnahmeelement zur Aufnahme mindestens eines Drahtbogenabschnittes von mindestens einem kieferorthopädischen Drahtbogen und ein Sicherungselement zur Sicherung des mindestens einen kieferorthopädischen Drahtbogens im Aufnahmeelement. Das Aufnahmeelement umfasst eine Basisplatte, eine erste resp. gingivale Aufnahmetasche zur Aufnahme eines ersten resp. gingivalen Drahtbogenabschnitts und eine zweite resp. okklusale Aufnahmetasche zur Aufnahme eines zweiten resp. okklusalen Drahtbogenabschnitts umfasst, die zusammen eine C-förmige Aufnahmeöffnung für das Sicherungselement ausbilden. Das Sicherungselement ist in einem eingesetzten Zustand in der C-förmigen Aufnahmeöffnung gehalten. Die erste resp. gingivale Aufnahmetasche weist eine mit gleichbleibendem Radius gebogene Innenfläche auf und der mindestens eine Drahtbogen ist im eingesetzten Zustand des Sicherungselements wenigstens in der gingivalen Aufnahmetasche haltbar und an der gebogenen Innenfläche der ersten resp. gingivalen Aufnahmetasche anlegbar. Das Sicherungselement weist eine auf einen ersten resp. gingivalen Drahtbogenabschnitt abgestimmte erste resp. gingivale Anlagefläche zur Sicherung des mindestens einen Drahtbogens in der ersten resp. gingivalen Aufnahmetasche auf. Zwischen Sicherungselement und Aufnahmetasche ist entsprechend eine erste resp. gingivale Durchgangsöffnung für eine ersten resp. gingivalen Drahtbogen ausgebildet.

Diese Grundform des Aufnahmeelements erlaubt die Zuordnung verschiedener kieferorthopädischer Funktionen durch geeignete Ausgestaltung der Anlagefläche des Sicherungselements und der Auswahl des Drahtbogens, wobei allen Sicherungselementen gemein ist, dass sie eine erste resp. gingivale Anlagefläche zur Sicherung des mindestens einen Drahtbogens in der ersten resp. gingivalen Aufnahmetasche. Die einzelnen Funktionen sind im Folgenden detaillierter erläutert. Während einer Behandlung muss also das Aufnahmeelement je nach Funktion nicht ausgetauscht werden. Die Dimensionen der Slots resp. Führungen für Drahtbögen und zum Teil sogar deren Ausrichtung können während der Behandlung durch einfaches Austauschen der Sicherungselemente geändert werden.

Die Öffnungen der Aufnahmetaschen sind zueinander gerichtet und bilden so zusammen mit der Basisplatte die im Querschnitt C-förmige Aufnahmeöffnung für das Sicherungselement. Das Aufnahmeelement mit seiner im Querschnitt C-förmigen Aufnahmeöffnung ist dabei das zentrale Element, in welches mindestens ein erster resp. gingivaler Drahtbogen eingelegt werden kann, welcher dann mittels des Sicherungselements gesichert ist, indem dieses eine auf einen Drahtbogenabschnitt abgestimmte Anlagefläche aufweist. D.h. in anderen Worten, dass das Aufnahmeelement und das Sicherungselement zusammen eine erste resp. gingivale Aussparung ausbilden, in welcher ein erster resp. gingivaler Drahtbogen geführt sein kann. Seitlich ist, d.h. in Längsrichtung des Aufnahmeelements, ist dieses offen ausgestaltet. Die Längsrichtung entspricht der Hauptrichtung, in welcher der Drahtbogen geführt ist.

Zur Befestigung von Runddrähten bei Korrekturen erster Ordnung werden insbesondere schwenkbare Sicherungselemente verwendet, die weiter unten im Detail beschrieben sind. Bei sehr schwierigen Fällen oder in schwierigen Situationen können dann zur noch präziseren Einstellung eines Zahnes oder eines Zahnbogensegmentes mit einschiebbaren Sicherungselemente in Form von Drehmomentelementen Korrekturen bezüglich zweiter und dritter Ordnung (Angulation und Torque) vorgenommen werden. Auch diese Elemente sind weiter unten im Detail beschrieben.

Die beiden Aufnahmetaschen bilden jeweils Hinterschnitte in der C-Form aus (senkrecht zur Basisplatte gesehen), so dass jeweilige Drahtbogen ohne Sicherung durch das Sicherungselement auch lose in den Aufnahmetaschen geführt sein können.

Die Öffnung der C-Form ist entsprechend so dimensioniert, dass ein Drahtbogen und/oder das Sicherungselement von vorne, d.h. von der der Basisplatte abgewandten Seite einsetzbar sind. Alternativ kann das Sicherungselement auch seitlich in die Aufnahmeöffnung eingeschoben werden, wie dies beispielsweise für die weiter unten beschriebene Drehmomentelemente der Fall ist.

Idealerweise ist das Sicherungselement im eingesetzten Zustand einrastend und verdrehsicher gehalten.

Wird das Aufnahmeelement als herkömmliches Bracket oder als Lingual-Schloss (auch Goshgarian-Schloss genannt) für einen Lingual- bzw. Palatinalbogen verwendet und dabei direkt oder indirekt an einem Zahn befestigt, so ist die erste Aufnahmetasche immer eine gingivale Aufnahmetasche, welche im befestigten Zustand des Aufnahmeelements gingival ausgerichtet ist. Entsprechend ist die zweite Aufnahmetasche ist eine okklusal ausgerichtete, okklusale Aufnahmetasche. In einigen Ausführungsformen kann die erste resp. gingivale Aufnahmetasche grösser als die zweite resp. okklusale Aufnahmetasche ausgebildet sein.

In einigen Ausführungsformen kann ein Endbereich einer Seitenwand der ersten resp. gingivalen Aufnahmetaschen nach innen zur Basisplatte geneigt sein, d.h. die Biegung der Innenfläche ist über 180°, vorzugsweise etwa 200° bis 220°.

In einigen Ausführungsformen kann ein Endbereich der Seitenwand der zweiten resp. okklusalen Aufnahmetaschen nach aussen von der Basisplatte weg geneigt sein, d.h. die Biegung der Innenfläche ist weniger als 180°, vorzugsweise etwa 160° bis 170°. Der Endbereich kann dabei im Querschnitt gesehen einen linearen Bereich aufweisen, und die Fluchtlinie des Endbereichs kann in etwa durch einen Scheitelbereich der ersten resp. gingivalen Aufnahmetasche führen.

In einigen Ausführungsformen kann die zweite resp. okklusale Aufnahmetasche eine mit gleichbleibenden Radius gebogene Innenfläche aufweisen. Auch das Sicherungselement kann eine auf einen zweiten resp. okklusalen Drahtbogenabschnitt abgestimmte zweite resp. okklusale Anlagefläche zur Sicherung des mindestens einen Drahtbogens oder eines zweiten Drahtbogens in der zweiten resp. okklusalen Aufnahmetasche aufweist. Entsprechen ist dann zusätzlich zur ersten resp. gingivalen Durchgangsöffnung für den ersten resp. gingivalen Drahtbogen oder Drahtbogenabschnitt eine zweite resp. okklusale Durchgangsöffnung resp. eine Tunnel oder ein sogenanntes Röhrchen für einen zweiten resp. okklusalen Drahtbogen oder Drahtbogenabschnitt ausgebildet.

Die kieferorthopädische Behandlungseinrichtung kann entsprechen zu Sicherung eines ersten resp. gingivalen Drahtbogens und optional eines separaten zweiten resp. okklusalen Drahtbogens eingesetzt werden. Ebenfalls kann ein einzelner Drahtbogen mit einem ersten resp. gingivalen und einem zweiten resp. okklusalen Drahtbogenabschnitt - wie beispielsweise bei einem Palatinalbogen - mit der Behandlungseinrichtung gesichert werden. Dabei ist das Sicherungselement direkt in die beiden Aufnahmetaschen eingreifen in der Aufnahmeöffnung des Aufnahmeelements gehalten oder es kann indirekt in der Aufnahmeöffnung gehalten sein, indem es beispielsweise unter den beiden Drahtbogenabschnitten eines Palantialbogens eingreift.

In einigen Ausführungsformen kann das Sicherungselement einen ersten resp. gingivalen Scharnierabschnitt aufweisen, welcher gelenkig in der ersten resp. gingivalen Aufnahmetasche aufnehmbar ist, so dass das Sicherungselement zwischen einem ausgeschwenkten Zustand und einem eingeschwenkten Zustand hin und her bewegbar ist. Die auf einen ersten resp. gingivalen Drahtbogenabschnitt abgestimmte erste resp. gingivale Anlagefläche ist als Aussparung im Scharnierabschnitt ausgebildet ist. Die Aussparung ist derart angeordnet, dass der Drahtbogen im ausgeschwenkten Zustand des Sicherungselements mit dem Drahtbogenabschnitt in die Aussparung einlegbar ist, und dass der Drahtbogenabschnitt im eingeschwenkten Zustand des Sicherungselements zwischen der erste resp. gingivale Anlagefläche des Sicherungselements und der Innenfläche der ersten resp. gingivalen Aufnahmetasche gehalten ist. Bevorzugt ist die Aussparung exzentrisch zur einer Schwenkachse des Sicherungselements angeordnet.

Die schwenkbaren Sicherungselemente werden von Behandler vorne in die C-förmige Aufnahmeöffnung eingebracht und eingeklickt. Geschlossen werden sie durch Zudrücken mittels Finger oder einem beliebigen, flachen Instrument. Geöffnet werden sie durch ein schmales flaches Instrument, das sich zwischen einem okklusalen Einschnitt des Aufnahmeelements und dem Sicherungselement einführen und kippen lässt. Die Sicherungselemente formen in der Regel zwei Slots resp. Führungen für Drahtbögen und bieten damit in der Regel zwei vertikal getrennten Runddrähten Platz. Anstelle eines Drahtes lassen sich auch Gummizüge verwenden. Die Einsetzteile können verschieden ausgeformt sein und damit verschiedene Slotgrössen bilden. Damit und dank der bisher nicht bekannten Kleinheit und Kompaktheit der Aufnahmeelemente bzw. Brackets lassen sich neue, ebenfalls bisher noch nicht übliche feine, elastische Drähte verwenden. Die sind dank der Übereinstimmbarkeit von Slotgrösse und Drahtdimension fähig, selbst ausgeprägteste Fehlstellungen bis zur Perfektion zu korrigieren.

In einigen Ausführungsformen kann das Aufnahmeelement ein an einem Zahn des Patienten befestigbares Bracket und das Sicherungselement ein Drehmomentelement zur Einstellung eines Drehmoments vom kieferorthopädischen Drahtbogen auf das Bracket sein. Die Basisplatte, die gingivale Aufnahmetasche und die okklusale Aufnahmetasche bilden zusammen die Aufnahmeöffnung für das Drehmomentelement aus; wobei das Drehmomentelement im eingesetzten Zustand verdrehsicher in der Aufnahmeöffnung aufgenommen ist. Die gingivale Anlagefläche weist die Funktion einer Drehmomentübertragungsfläche zur Ausübung eines Drehmoments vom Drahtbogen auf das Bracket auf.

Diese einschiebbaren Sicherungselemente sind für schwierige Fälle oder Situationen vorgesehen und kommen frühestens nach der weitgehenden Einstellung einer Zahnreihe mit schwenkbaren Sicherungselementen und Runddrähten zum Einsatz. Also nur, wenn ein Bedarf für Behandlungsmassnahmen besteht, die mit Runddrähten nicht oder schlecht zu bewältigen sind. Vor der Verwendung von einschiebbaren Sicherungselemente müssen die schwenkbaren Sicherungselemente entfernt werden. Dann wird zuerst der Draht eingebracht und erst dann die Einschiebeteile seitlich in die Aufnahmeelemente geschoben. Damit wird zwar der Aufwand bei den nachfolgenden Sitzungen, bzw. bei den Kontrollen gegenüber den schwenkbaren Sicherungselementen natürlich grösser, zumal letztere nur auf- und zugeklappt werden müssen. Die Aufnahmeelemente selbst müssen dabei jedoch nicht ausgetauscht werden.

Die einschiebbaren Sicherungselemente können mit Serien verschiedener Torquewerte auf verschiedene Drahtdimensionen industriell vorgefertigt werden. Damit kann der Behandler die Feineinstellung mit einem Draht seiner Wahl vornehmen und ist nicht darauf angewiesen, die extrem starken Vierkantdrähte zu verwenden, nur weil z.B. herkömmliche Bracketslots dies erfordern. Daneben kann ein Rohling für einschiebbare Sicherungselemente hergestellt und angeboten werden, die mittels eines CAD/CAM Schleifgerätes durch den Behandler direkt während der Sitzung auf die individuellen Bedürfnisse zugeschliffen werden kann.

Die Drehmomentübertragungsfläche ist derart ausgestaltet und angeordnet, dass der im eingesetzten Zustand an der Drehmomentübertragungsfläche anliegende Drahtbogen mit einer Kante vorzugsweise zwei nebeneinanderliegenden Kanten auf der gebogenen Innenfläche der gingivalen Aufnahmetasche oder mit nur einer Seitenfläche auf der Basisplatte verdrehsicher aufliegt. Dabei kann der Drahtbogen ein Flachdraht mit rechteckigem Querschnitt oder ein Draht mit jeweils zwei gegenüberliegenden parallelen Flächen und abgeschrägten oder abgerundeten Kanten sein.

In einigen Ausführungsformen weist das Sicherungselement einen okklusalen Absatz auf, mit welchen das Sicherungselement im eingesetzten Zustand in die okklusale Aufnahmetasche des Aufnahmeelements eingreift.

Das Drehmomentelement dient der Einstellung eines Drehmoments von einem kieferorthopädischen Drahtbogen auf ein kieferorthopädisches Bracket, wobei das Bracket eine Basisplatte zur Befestigung des Brackets auf einem Zahn, z.B. durch direktes aufkleben oder indirekt mittels eines Bandes, eine gingivale Aufnahmetasche und eine okklusale Aufnahmetasche umfasst, die zusammen eine Aufnahmeöffnung für das Drehmomentelement ausbilden. Das Drehmomentelement kann seitlich in das Bracket geschoben werden und ist in einem eingesetzten Zustand verdrehsicher in der Aufnahmeöffnung des Brackets aufgenommen. Das Drehmomentelement weist eine Drehmomentübertragungsfläche zur Ausübung eines Drehmoments vom Drahtbogen auf das Bracket auf. Die Drehmomentübertragungsfläche ist an einer Seite resp. in einem Bereich des Drehmomentelements ausgebildet, welche(r) im eingesetzten Zustand des Drehmomentelements durch das Bracket umschlossen ist, so dass im eingesetzten Zustand des Drehmomentelements der Drahtbogen durch das Drehmomentelement verdrehsicher gehalten und zwischen dem Drehmomentelement und dem Bracket geführt ist. Mittels der Drehmomentübertragungsfläche wird also zwischen Drehmomentelement und Bracket eine gingivale oder basisseitige Führung für einen Drahtbogen mit jeweils zwei gegenüberliegenden parallelen Seitenflächen, z.B. ein Flachdraht mit rechteckigem Querschnitt, ausgebildet.

Weitere Hilfsmittel wie sog. Klappen oder Ligaturen sind zum Halten des Drahtbogens somit nicht notwendig, da das Drehmomentelement zusätzlich die ligierende Funktion übernimmt. Zudem sind Torque-Werte resp. Inklinations-Werte aber auch Angulations-Werte über die Neigung und den Verlauf der Drehmomentübertragungsfläche individuell einstellbar, z.B. vor Ort mit geeigneter Apparatur, wie weiter unten noch im Detail erläutert wird. Ein weiterer Vorteil besteht darin, dass die Brackets bezüglich Inklination und Angulation nicht exakt ausgerichtet sein müssen, sondern lediglich bezüglich der Kontur der Zahnoberfläche. Die Einstellung der korrekten Inklination resp. des korrekten Torques und der korrekten Angulation erfolgt nach den Vorstellungen des Behandlers und kann durch die Auswahl oder Fertigung eines Drehmomentelements mit dem gewünschten Torque- und/oder Angulations-Wert exakt eingestellt werden. Mit dem Drehmomentelement kann also die Richtung und Dosierung der auf die Zähne wirkenden Kräfte des Drahtbogens exakt eingestellt werden. Ein wesentlicher Vorteil ist auch, dass die Drehmomentelemente für beliebige Drahtdimensionen bereitgestellt werden können und Feineinstellungen nicht mehr mit den stärksten Drähten gemacht werden müssen.

Die Öffnungen der Aufnahmetaschen sind zueinander gerichtet und bilden so zusammen mit der Basisplatte eine Aufnahmeöffnung für das Sicherungselement z.B. in Form eines Drehmomentelements, welches seitlich, d.h. in Längsrichtung des Brackets resp. Längsrichtung des Drehmomentelements, in die Aufnahmeöffnung einschiebbar ist. Die Längsrichtung ist demnach senkrecht zur gingivalen resp. okklusalen Richtung.

In diesem eingesetzten Zustand kann das Drehmomentelement z.B. über angeformte Einrastelemente, welche in entsprechende komplementäre Einrastmittel des Aufnahmeelements resp. Brackets eingreifen, gegenüber ungewolltem Herausfallen gesichert sein.

Im eingesetzten Zustand des Drehmomentelements, d.h. wenn das Drehmomentelement in der Aufnahmeöffnung des Brackets eingesetzt ist, ist dieses gingival, okklusal und basisplattenseitig vom Bracket umschlossen. Lediglich die von der Basisplatte abgewandte Seite des Drehmomentelements, liegt frei und kann eine Bedienöffnung aufweisen, mittels welcher das Drehmomentelement mit geeignetem Werkzeug in das Bracket einführbar ist. Alternativ kann das Drehmomentübertragungselement anstelle der Bedienöffnung, einen Bediengriff aufweisen.

In einigen Ausführungsformen weist das Drehmomentelement einen gingivalen Absatz und einen okklusalen Absatz auf, mit welchen das Drehmomentelement im eingesetzten Zustand in die gingivale Aufnahmetasche respektive in die okklusale Aufnahmetasche des Aufnahmeelements resp. Brackets eingreift.

In einigen Ausführungsformen kann die Drehmomentübertragungsfläche derart ausgebildet sein, dass ein Drahtbogen mit jeweils zwei gegenüberliegenden parallelen Seitefläche, z.B. in Form eines Flachsdrahtes, direkt im Drehmomentelement oder indirekt im Zusammenspiel mit dem Bracket verdrehsicher geführt ist. So kann die Drehmomentübertragungsfläche beispielsweise in Form einer Drehmomentübertragungsnut oder Drehmomentübertragungsebene ausgebildet sein. Die Drehmomentübertragungsfläche ist dabei vorzugsweise gingivalwärts gerichtet, d.h. an der gingivalen Seite resp. im gingivalen Bereich des Drehmomentelements, so dass der Drahtbogen im Bereich der gingivalen Aufnahmetasche geführt ist. In diesem Fall ist eine Drehmomentübertragungsebene ausreichend und wenigstens eine vorzugsweise zwei nebeneinanderliegende Kanten des Drahtbogens liegen auf der gebogenen Innenfläche der gingivalen Aufnahmetasche auf. Über die Wahl des Winkels der Drehmomentübertragungsfläche in Bezug auf die Basisplatte kann so das gewünschte Drehmoment eingestellt werden. Ist eine Ausrichtung gingivalwärts nicht möglich oder nicht gewünscht, so kann die Drahtbogenführung mittels einer Drehmomentübertragungsnut auch zur Basisplatte hin nach okklusal verlagert sein. Dabei liegt der Drahtbogen mit nur einer Seitenfläche auf der Basisplatte auf. Eine basisseitige Anordnung der Drehmomentübertragungsnut ist insbesondere zur Einstellung von Angulations-Werten geeignet, indem der Drahtbogen nicht parallel zur Längsrichtung des Brackets geführt werden soll.

Die Drehmomentübertragungsfläche kann stufenlos einen Torque-Wert von minus (-) 60 bis plus (+) 60 Grad definieren, wobei meist Werte zwischen -56 und +28 in der Praxis Verwendung finden. Dieser Torque-Wert wird anhand des Winkels zwischen der Drehmomentübertragungsfläche und der Senkrechten auf die basisseitig Fläche des Drehmomentelements resp. der Befestigungsfläche der Basisplatte im eingesetzten Zustand des Drehmomentelements bestimmt resp. eingestellt.

In einigen Ausführungsformen kann die Drehmomentübertragungsnut z.B. zur Einstellung der Angulation, in der Rückseite des Drehmomentelements angeordnet sein, d.h. basisseitig in der zur Basisplatten zugewandten Seite. Im eingesetzten Zustand des Drehmomentelements verläuft die Drehmomentübertragungsnut parallel zur Basisplatte resp. zur Befestigungsfläche der Basisplatte. Je nach zu korrigierender Angulation (mesial oder distal) kann dabei die Drehmomentübertragungsnut in Bezug auf die Längsrichtung des Drehmomentelements resp. des Brackets um minus (-) 15 Grad bis plus (+) 15 Grad geneigt sein, wobei meist Werte zwischen -12 und +12 in der Praxis Verwendung finden.

In einigen Ausführungsformen kann das Drehmomentelement an der okklusalen Seite derart gestaltet sein, dass sich im eingesetzten Zustand zwischen Drehmomentelement und Basisplatte in der okklusalen Aufnahmetaschen eine okklusale Führung resp. eine Tunnel oder ein sogenanntes Röhrchen ausbildet, worin beispielsweise eine Runddraht aufnehmbar ist. Auf diese Weise kann das Drehmomentelement zusätzlich z.B. zum Schliessen von Lücken zwischen zwei Zähnen verwendet werden, ohne dass das Bracket ausgetauscht werden muss. Dabei kann das Drehmomentelement mit oder ohne Drehmomentübertragungsfläche ausgebildet sein.

In einigen Ausführungsformen kann eine die erste resp. gingivale Aufnahmetasche bildende Seitenwand oder eine die zweite resp. okklusale Aufnahmetasche bildende Seitenwand des Aufnahmeelements beidseitig eine Verlängerung aufweist, die bis zur gegenüberliegenden Seitenwand der gegenüberliegende Aufnahmetasche reicht und dort befestigt ist. Auf diese Weise kann das Aufnahmeelement als Lingualschloss für eine Lingualbogen verwendet werden, wobei dies auch mit einem unveränderten Aufnahmeelement bereits möglich ist.

In einigen Ausführungsformen kann das Drehmomentübertragungselement aus Kunststoff, z.B. Crastin^{®} (ein Polybutylenterephthalat), Metall oder Keramik, z.B. Zirkoniumdioxid, gefertigt sein.

In einigen Ausführungsformen kann eine die erste resp. gingivale Aufnahmetasche bildende Seitenwand des Aufnahmeelements und/oder eine die zweite resp. okklusale Aufnahmetasche bildende Seitenwand des Aufnahmeelements eine Einbuchtung für eine gingivale und/oder okklusale Rastnase des Sicherungselements umfasst, wobei die Einbuchtung vorzugsweise in Längsrichtung des Aufnahmeelements mittig angeordnet ist.

Die Erfindung betrifft weiter eine Behandlungsapparatur umfassend mehrere Behandlungseinrichtungen wie oben beschrieben und mindestens einen Drahtbogen.

Die beschriebenen Aufnahme- und Sicherungselemente ermöglichen in Kombination mit der digitalen Technik und einer einfachen Präzisisonsschleifmaschine, individualisierte Sicherungselemente insbesondere die Drehmomentelemente direkt am Stuhl des Patienten herzustellen. Je nach Bedarf können Torque-Werte von -56° bis +28° in Kombination mit Angulations-Werten von bis zu ± 12° gewählt werden.

Offenbart ist zudem ein Verfahren zur Herstellung eines voran beschriebenen Drehmomentelements zur individuellen Einstellung einer Drehmomentübertragung von einem kieferorthopädischen Drahtbogen auf ein kieferorthopädisches Bracket. Das Verfahren umfasst die Schritte: (a) Bereitstellen eines Rohlings des Drehmomentelements, welches einen gingivalen Bereich aufweist, der im eingesetzten Zustand des Rohlings die gingivale Aufnahmetasche des Brackets annähernd vollständig ausfüllt; (b) Bestimmung der gewünschten Ausrichtung des Drehmomentübertragungsfläche anhand einer Ist- und einer Soll-Zahnstellung; (c) Bearbeitung des Rohlings, um mittels einem trennenden Fertigungsverfahrens das Drehmomentelement mit der gewünschten Ausrichtung und Form der Drehmomentübertragungsfläche zu erhalten.

In einigen Ausführungsformen kann die gewünschte Ausrichtung der Drehmomentübertragungsfläche unter Einbezug der effektiven Positionierung des Brackets auf einem Zahn bestimmt werden. Auf diese Weise können beispielsweise Ungenauigkeiten bei der Befestigung der Brackets, z.B. Klebefehler, ausgeglichen werden.

Offenbart ist zudem eine Fertigungseinrichtung zur Herstellung eines voran beschriebenen Drehmomentelements gemäss dem obigen Verfahren. Die Fertigungseinrichtung umfasst ein Computerprogram zur Berechnung der gewünschten Ausrichtung der Drehmomentübertragungsfläche anhand eines digitalisierten dreidimensionalen Modells des Gebisses eines Patienten und ein Fertigungsanlage zur Herstellung des Drehmomentelements mit der gewünschten Drehmomentübertragungsfläche ausgehend von einem Rohling eines Drehmomentelements. Alternativ kann das Drehmomentübertragungselement mittels additiven Fertigungsmethoden gefertigt werden.

### Kurze Erläuterung zu den Figuren

Die Erfindung soll nachfolgend anhand von Ausführungsbeispielen im Zusammenhang mit der(an) Zeichnung(en) näher erläutert werden. Es zeigen:
- Fig. 1: eine perspektivische Ansicht eines Aufnahmeelements mit C-förmiger Aufnahmeöffnung für ein Sicherungselement;
- Fig. 2: eine perspektivische Ansicht eines Drehmomentelements zur Aufnahmeöffnung in einem Bracket gemäss Fig. 1;
- Fig. 3: eine perspektivische Ansicht eines Drehmomentelements im montierten Zustand;
- Fig. 4: eine Seitenansicht des Brackets mit Drehmomentelement gemäss Fig. 3;
- Fig. 5: eine Seitenansicht von Varianten eines Drehmomentelements mit unterschiedlichen Torque-Werten;
- Fig. 6: eine perspektivische Ansicht eines Drehmomentelements zur Einstellung der Angulation;
- Fig. 7: eine Draufsicht auf die Basisseite des Drehmomentelements gemäss Fig. 6;
- Fig. 8: ein Drehmomentelement mit Drehmomentübertragungsebene unter (a) in einer perspektivischen Ansicht von vorne, unter (b) in einer perspektivischen Ansicht auf die Basisplatte und unter (c) in einer Vorderansicht;
- Fig. 9: eine Seitenansicht des Drehmomentelements aus Fig. 8 im eingesetzten Zustand;
- Fig. 10: unter (a) bis (j) jeweils eine Seitenansicht eines Drehmomentelements mit Drehmomentübertragungsebene mit unterschiedlichen Torque-Werten;
- Fig. 11: eine perspektivisch Ansicht einer Behandlungsapparatur auf einem Zahn,
- Fig. 12: unter (a) eine perspektivische Ansicht und unter (b) eine Seitenansicht einer weiteren Variante des Drehmomentübertragungselements und unter (c) im eingesetzten Zustand;
- Fig. 13: ein Aufnahmeelement mit schwenkbarem Sicherungselement im ausgeschwenkten Zustand unter (a) in einer Seitenansicht und unter (b) in einer perspektivischen Ansicht;
- Fig. 14: das Aufnahmeelement mit schwenkbarem Sicherungselement aus Fig. 13 im eingeschwenkten Zustand unter (a) in einer Seitenansicht und unter (b) in einer perspektivischen Ansicht;
- Fig. 15: ein Aufnahmeelement und ein Sicherungselement zur Ausbildung eines Lingualschlosses;
- Fig. 16: Varianten (a) bis (d) eines temporäres Knochenimplantats mit Aufnahmeelement; und
- Fig. 17: ein Band mit Aufnahmeelement.

### Wege zur Ausführung der Erfindung

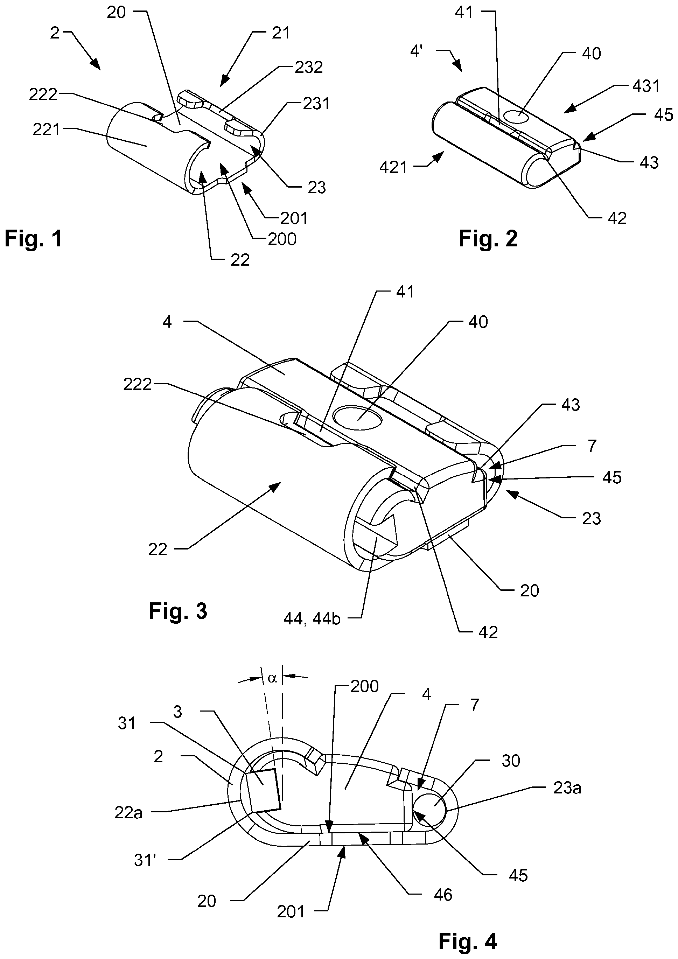

Fig. 1 zeigt eine perspektivische Ansicht eines als Bracket ausgebildeten Aufnahmeelements 2 mit einer im Querschnitt C-förmigen Aufnahmeöffnung 21 (aus dem Englischen auch Slot genannt) zur Aufnahme eines Sicherungselements. Das Aufnahmeelement 2 umfasst eine Basisplatte 20 mit einer vorderseitigen im Wesentlichen plane Basisfläche 200. Mit vorderseitig ist die Seite gemeint, welche vom Zahn oder Gaumen eines Patienten abgewandt ist und für die Einlage eines Drahtbogens zugänglich ist. Beim Bracket dient die Basisplatte auch zur Befestigung des Brackets auf einem Zahn eines zu behandelnden Patienten. In der Regel weist die Basisplatte 20 dazu rückseitig eine im Wesentlichen plane Befestigungsfläche 201 auf. Die Befestigungsfläche 201 kann jedoch auch an eine Zahnform angepasst sein. Das Aufnahmeelement 2 umfasst weiter eine gingivale Aufnahmetasche 22 und eine okklusale Aufnahmetasche 23, deren Öffnungen zueinander gerichtet sind und die zusammen mit der Basisplatte 20 resp. der Basisfläche 200 eine Aufnahmeöffnung 21 für ein Sicherungselement ausbilden. Diese Aufnahmeöffnung 21 ist vorderseitig, d.h. auf der Seite des Aufnahmeelements 2 ausgebildet, welche der Befestigungsfläche 201 gegenüberliegt. In der dargestellten Ausführungsform sind die gingivale Aufnahmetasche 22 und die okklusale Aufnahmetasche 23 durch gebogene, an die Basisplatte 20 anschliessende Seitenwände 221, 231 ausgebildet und weisen jeweils eine mit gleichbleibendem Radius gebogene Innenfläche 22a, 23a auf.

Die Aufnahmeöffnung 21 ist in Längsrichtung des Aufnahmeelements 2 beidseitig offen. Die Längsrichtung des Aufnahmeelements 2 ist die Richtung, welche im Wesentlichen der Längsrichtung eines eingelegten Drahtbogens (ohne Angulation) entspricht. Die Seitenwände 221, 231 können an deren freien Enden resp. Endbereichen Einbuchtungen 222, 232 aufweisen, in welche Rastnasen eines Sicherungselements einrasten oder eingreifen können. In der gezeigten Ausführungsform weisen die gingivale Aufnahmetasche 22 und die okklusale Aufnahmetasche 23 eine im Wesentlichen kreissektor-förmigen Querschnitt auf.

Fig. 2 zeigt eine perspektivische Ansicht eines Rohlings 4' eines Sicherungselements in der Form eines Drehmomentelements 4. Dieser Rohling 4' ist das Ausgangselement, welches z.B. direkt von behandelnden Zahnarzt mit einer Drehmomentübertragungsfläche 44, 44a, 44b versehen werden kann, um ein einsatzbereites Drehmomentelement 4 zu erhalten. Beispiele für solche Drehmomentelemente 4 sind in den Figuren 3 bis 10 dargestellt.

Der Rohling 4' resp. das Drehmomentelement 4 weist einen gingivalen Absatz 42 und eine okklusalen Absatz 43 auf, mit welchen das Drehmomentelement 4 in einem eingesetzten Zustand in die gingivale Aufnahmetasche 22 respektive in die okklusale Aufnahmetasche 23 eingreift. Zur Sicherung des Drehmomentelements 4 vor Herausrutschen, kann dieses gingival und/oder okklusal eine Rastnase 41 aufweisen. In Fig. 2 ist eine gingivale Rastnase 41 gezeigt, welche in die entsprechende Einbuchtung 222 des Brackets 2 eingreifen kann. Weiter kann das Drehmomentelement 4 auf der dem Aufnahmeelement 2 resp. Bracket abgewandten Seite eine Bedienöffnung 40 aufweisen. Das Drehmomentelement 4 kann so mit einem geeigneten in die Bedienöffnung 40 eingreifenden Werkzeug seitlich in die Aufnahmeöffnung 21 des Aufnahmeelements 2 geschoben werden.

Die gingivalen Seite 421 des Rohlings 4' ist im Wesentlichen komplementär mit der gingivalen Aufnahmetasche 22. Die okklusale Seite 431 des Rohlings 4' kann - wie in Fig. 4 erkennbar - eine zweite resp. okklusale Anlagefläche 45 aufweisen, die derart ausgebildet ist, dass im eingesetzten Zustand zwischen dem Drehmomentelement 4 und dem Aufnahmeelement 2 eine Aufnahmeöffnung resp. Führung 7 für einen zweiten resp. okklusalen Drahtbogens in Form eines Runddraht 30 (vgl. Fig. 4) ausgebildet ist. Wird lediglich ein solcher Runddraht 30 verwendet, muss der Rohling 4' nicht bearbeitet werden, um eine Drehmomentübertragungsfläche 44, 44a, 44b auszubilden. Ein solches Sicherungselement kann auch verwendet werden, um anstelle eines Drahtes einen Gummifaden, zum Beispiel zum Schliessen von Lücken zwischen Zähnen, in der Führung 7 zu sichern.

Soll das Sicherungselement resp. Drehmomentelement 4 zur Übertragung eines Drehmoments von einem ersten resp. gingivalen Drahtbogen 3 auf das Aufnahmeelement oder Bracket 2 eingesetzt werden, so weist das Drehmomentelement 4 eine vorgefertigte oder eine individuell vom behandelnden Zahnarzt gefertigte Drehmomentübertragungsfläche 44, 44a, 44b auf. Diese Drehmomentübertragungsfläche 44, 44a, 44b ist derart an einer Seite resp. in einem Bereich des Drehmomentelements 4 angeordnet und ausgebildet, dass sie im eingesetzten Zustand des Drehmomentelements 4 durch das Aufnahmeelement resp. Bracket 2 umschlossen ist, so dass eine gingivale oder basisseitige Führung für den ersten resp. gingivalen Drahtbogen 3 ausgebildet ist. Der erste resp. gingivale Drahtbogen 3 ist durch das Drehmomentelement 4 verdrehsicher gehalten und zwischen dem Drehmomentelement 4 und dem Bracket 2 geführt. Dies ist in den Figuren 3 und 4 gut ersichtlich.

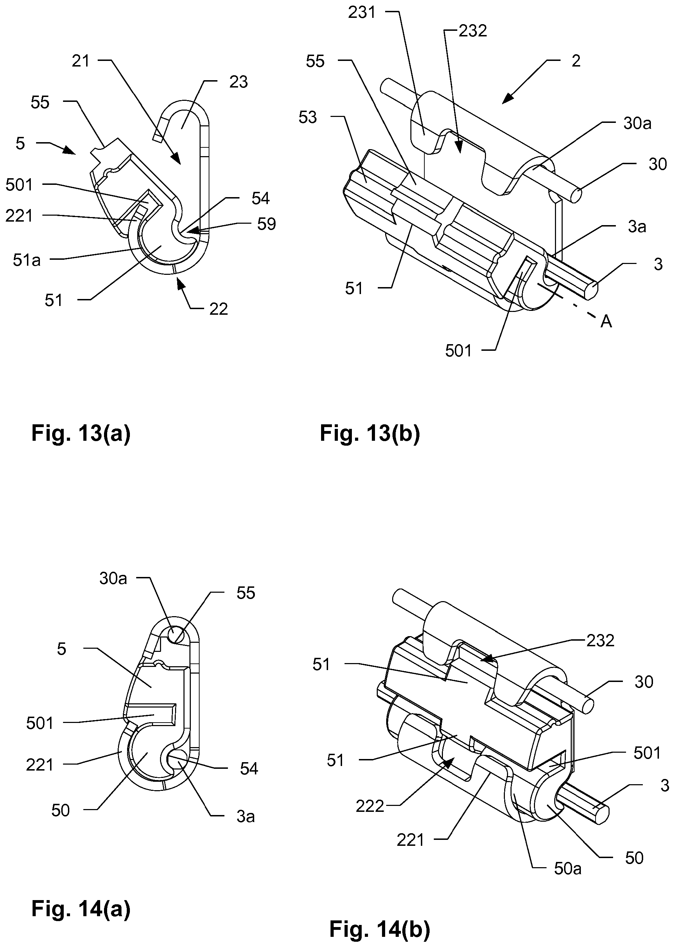

Fig. 3 zeigt nun eine perspektivische Ansicht des im Aufnahmeelement resp. Bracket 2 eingesetzten Sicherungselements resp. Drehmomentelements 4 mit einer Drehmomentübertragungsfläche, welche in der gezeigten Variante als Drehmomentübertragungsnut 44b ausgebildet ist. Fig. 4 zeigt eine Seitenansicht davon mit eingelegtem ersten resp. gingivalen Drahtbogen 3 und eingelegtem zweiten resp. okklusalen Drahtbogen 30 in Form eines Runddrahtes. Um ein Drehmoment zu Übertragen ist der erste resp. gingivale Drahtbogen ein Flachdraht mit rechteckigem Querschnitt oder ein Draht mit jeweils zwei gegenüberliegenden parallelen Flächen und abgeschrägten oder abgerundeten Kanten (vgl. Fig. 4 resp. Fig. 13(b)). Der ersten resp. gingivalen Drahtbogen 3 liegt mit einer Seitenfläche an der Drehmomentübertragungsfläche an und liegt mit einer oder zwei nebeneinanderliegenden Kanten 31, 31' an der runden Innenfläche der ersten resp. gingivalen Aufnahmetasche 22 an.

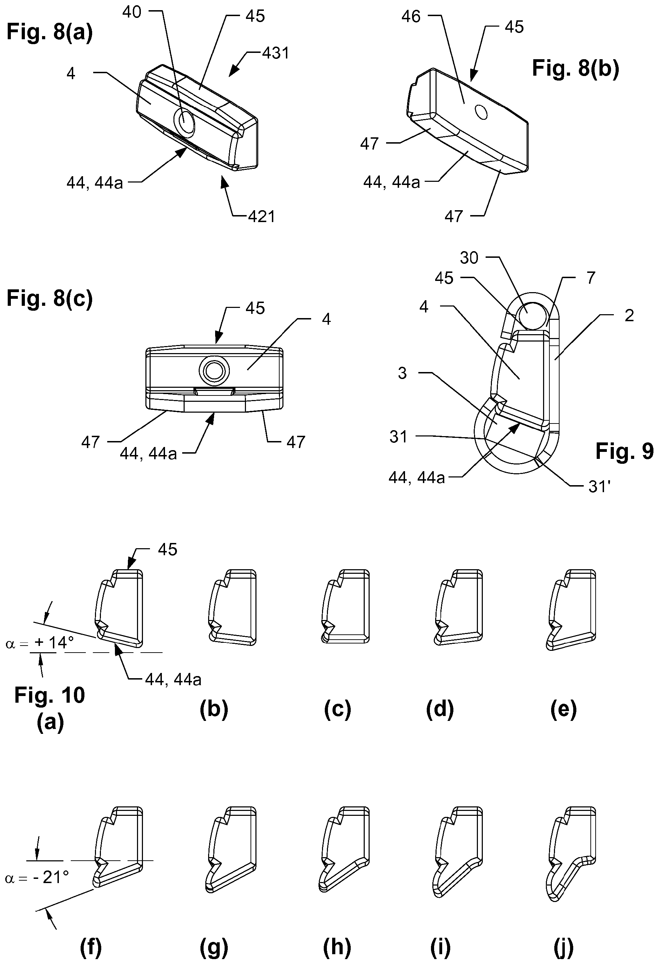

Bei der Variante des Drehmomentelements 4 aus Fig. 3 und 4 beträgt der sogenannte Torque-Wert α (alpha) ca. plus (+) 8 Grad. Dieser wird anhand des Winkels zwischen der Drehmomentübertragungsfläche und der Senkrechten auf die basisseitig Fläche 46 des Drehmomentelements 4 resp. der Befestigungsfläche 201 der Basisplatte 20 des Brackets 2 bestimmt, wie in den Figuren 4, 10(a) und 10(f) dargestellt.

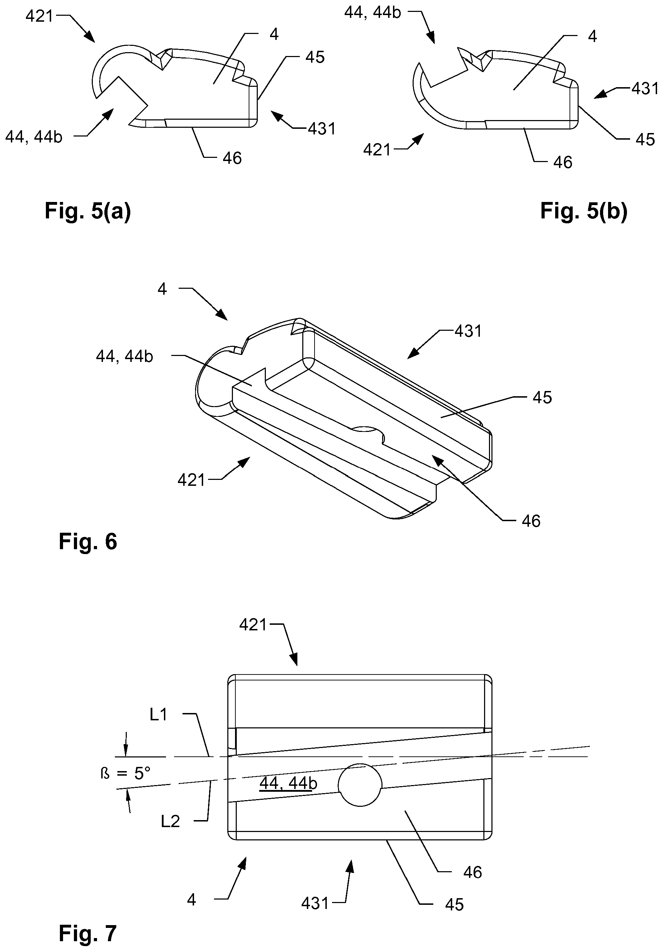

Fig. 5(a) und Fig. 5(b) zeigen jeweils eine Seitenansicht eines Drehmomentelements 4 mit Drehmomentübertragungsnut 44b, welche unterschiedliche Torque-Werte aufweisen. Bei der Variante in Fig. 5(a) ist die Drehmomentübertragungsnut gingival-basisseitig angeordnet und weist einen Torque-Werte von minus (-) 45 Grad auf. Bei der Variante in Fig. 5(b) ist die Drehmomentübertragungsnut gingival-basisabgewandt angeordnet und weist einen Torque-Wert von plus (+) 65 Grad auf. Diese Torque-Werte eines Drehmomentelements können entsprechend über einen sehr grossen Bereich von -60 bis +60 Grad je nach Bedarf gewählt werden.

Fig. 6 zeigt eine perspektivische Ansicht eines Drehmomentelements 4 zur Einstellung resp. Korrektur der Angulation eines Zahns. Fig. 7 zeigt eine Draufsicht auf die Basisseite des Drehmomentelements gemäss Fig. 6. Diese Variante des Drehmomentelements 4 weist in der Basisseite 46 resp. der Seite des Drehmomentelements 4, welche im eingesetzten Zustand der Basisplatte 20 zugewandt ist, eine Drehmomentübertragungsnut 44b auf. In der gezeigten Ausführungsform definiert die Drehmomentübertragungsnut 44b einen Angulations-Wert β von ca. 5 Grad (vgl. Fig. 7). Dieser wird anhand des Winkels zwischen der Längsrichtung L2 der Drehmomentübertragungsnut 44b und der Längsrichtung L1 des Drehmomentelements 4 resp. des Brackets 2 bestimmt.

Die Figuren 8, 9 und 10 zeigen Drehmomentelemente 4 deren Drehmomentübertragungsfläche 44 als Drehmomentübertragungsebene 44a ausgebildet sind. Die Drehmomentübertragungsebene 44a ist jeweils an der gingivalen Seite 421 des Drehmomentelements 4 mit dem gewünschten Torque-Wert α (alpha) ausgebildet. Das Drehmomentelement 4 kann in Längsrichtung gesehen beidseitig von der Drehmomentübertragungsebene 44a eine Abschrägung 47 aufweisen, damit das Drehmomentelement 4 leichter in die Aufnahmeöffnung 21 eines Aufnahmeelements resp. Brackets 2 eingeschoben werden kann. Bei dem Drehmomentelement 4 in den Figuren 8 und 9 beträgt der Torque-Wert α (alpha) +21 Grad. Bei den Drehmomentelementen 4 der Figuren 10(a) bis (j) beträgt der Torque-Wert α (alpha) +14, +7, 0, -7, -14, -21, -28, -35, -42, -49 resp. ca. -56 Grad. In Fig. 9 ist zusätzlich der erste resp. gingivale Drahtbogen 3 in Form eines Flachdrahtes gezeigt, welcher mit einer Seitenfläche an der ersten resp. gingivalen Anlagefläche resp. Drehmomentübertragungsebne 44a aufliegt und mit zwei nebeneinanderliegenden Kanten 31, 31' des Flachdrahts an der erste resp. gingivale Innenfläche 22a der ersten resp. gingivalen Aufnahmetasche 22 aufliegt. Die mit gleichbleibendem Radius gebogene Innenfläche 22a erlaubt dabei eine stufenlose Einstellung des Torque-Wertes je nach Winkel der Drehmomentübertragungsfläche 44a und zwar ohne dass das Aufnahmeelement 2 ausgetauscht resp. geändert werden muss.

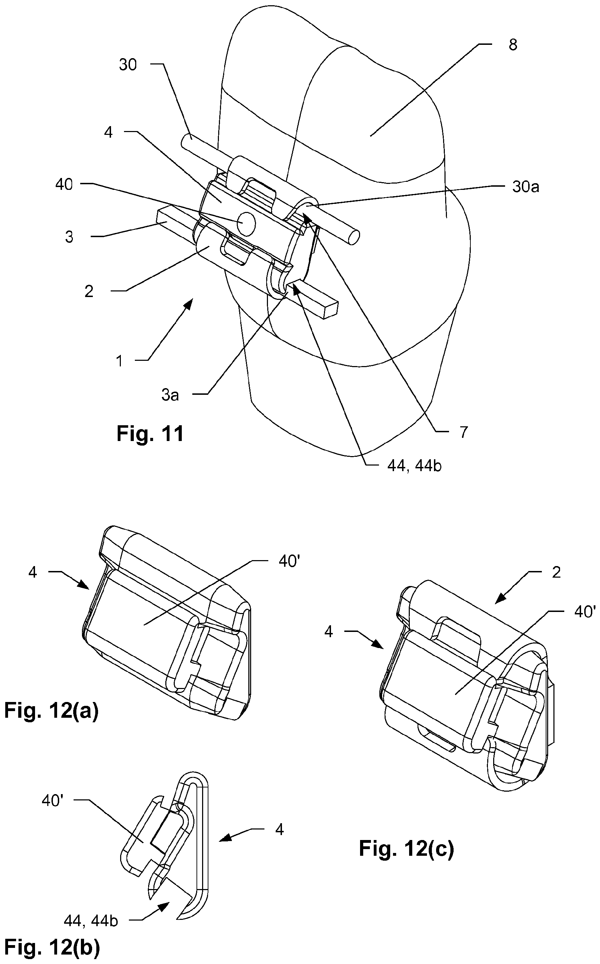

Fig. 11 zeigt eine perspektivisch Ansicht einer Behandlungsapparatur umfassend ein Bracket 2, ein Drehmomentelement 4 gemäss Fig. 3 oder 4, einen Drahtbogen resp. Flachdraht 3 und einen Runddraht 30. Das Bracket 2 ist mit der Befestigungsfläche auf einem Zahn 6 befestigt. Das Drehmomentelement 4 weist eine Drehmomentübertragungsnut 44b auf und ist im Bracket 2 eingesetzt. Der erste resp. gingivale Drahtbogen 3 ist in der Drehmomentübertragungsnut 44b zwischen Drehmomentelement 4 und Bracket 2 verdrehsicher gehalten. Der zweite resp. okklusale Runddraht 30 ist in einer okklusalen Führung 7 zwischen Drehmomentelement 4 und Bracket 2 angeordnet. Ein solches Sicherungselement kann auch verwendet werden, um anstelle eines Drahtes einen Gummifaden, zum Beispiel zum Schliessen von Lücken zwischen Zähnen, in der okklusalen Führung 7 zu sichern.

Figuren 12(a), 12(b) und 12(c) zeigen eine weitere Variante des Drehmomentelements 4, welches im Unterschied zu den voran beschriebenen Varianten anstelle der Bedienöffnung 40 einen Bediengriff 40' zum Ein- und Ausschieben des Drehmomentelements in die Aufnahmeöffnung 21 des Aufnahmeelements 2 aufweist.

Figuren 13(a) und 13(b) zeigen ein Aufnahmeelement 2 mit schwenkbarem Sicherungselement 5 im ausgeschwenkten Zustand. Figuren 14(a) und 14(b) zeigen das schwenkbare Sicherungselement aus Fig. 13 im eingeschwenkten Zustand. Das schwenkbare Sicherungselement weist einen ersten resp. gingivalen Scharnierabschnitt 50 auf. Der Scharnierabschnitt 50 ist derart ausgestaltet, dass er gelenkig in der ersten resp. gingivalen Aufnahmetasche 22 aufnehmbar ist und so zwischen einem ausgeschwenkten Zustand (Fig. 13) und einem eingeschwenkten Zustand (Fig. 14) hin und her bewegbar ist. Im eingeschwenkten Zustand ist das Sicherungselement 5 in der C-förmigen Aufnahmeöffnung 21 des Aufnahmeelement 2 vorzugsweise einrastend aufgenommen, welches die bereits voran beschriebene Form aufweist.

D.h. ein an einem Zahn 8 befestigtes Aufnahmeelement 2 muss nicht gewechselt werden, um der kieferorthopädischen Behandlungseinrichtung unterschiedliche Funktionen in Bezug auf die Richtung der Zahnkorrektur zuzuordnen. Dies wird über die Sicherungselement gemacht. So wird mit dem schwenkbaren Sicherungselement 5 ein erster resp. gingivaler Drahtbogen 3 in Form eine Runddrahtes in der gingivalen Aufnahmetasche 22 gehalten.

Dazu weist das schwenkbare Sicherungselement 5 eine auf einen ersten resp. gingivalen Drahtbogenabschnitt 3a des Drahtbogens 3 abgestimmte erste resp. gingivale Anlagefläche 54 auf. Diese Anlagefläche ist als Aussparung 59 im Scharnierabschnitte 50 ausgebildet und derart angeordnet, dass der Drahtbogen 3 im ausgeschwenkten Zustand des Sicherungselements 5 mit dem Drahtbogenabschnitt 3a in die Aussparung 59 zwischen Sicherungselement und Aufnahmeelement einlegbar ist. Im eingeschwenkten Zustand des Sicherungselements 5 (vgl. Fig. 14) ist Drahtbogenabschnitt 3a zwischen der erste resp. gingivale Anlagefläche 54 des Sicherungselements 5 und der Innenfläche 22a der ersten resp. gingivalen Aufnahmetasche 22 gehalten.

Wie in der gezeigten Ausführungsform dargestellt, kann die Aussparung 50 exzentrisch zur Schwenkachse A des Sicherungselements 5 angeordnet sein.

Wie in den Figuren 13 und 14 gezeigt, kann das Sicherungselement 5 zudem mit an der dem Scharnierabschnitt 50 gegenüberliegenden Seite 431 einen Absatz 53 in Form einer Wulst aufweisen, damit das Sicherungselement 5 im eingeschwenkten Zustand in der zweiten resp. okklusalen Aufnahmetasche 23 resp. unter deren Endbereich der Seitenwand 231 einrastet. Zudem kann das Sicherungselement 5 mit einer oder zwei vorderseitigen Rastnasen 51 versehen sein, welche in entsprechende Einbuchtungen 222, 232 des Aufnahmeelements 2 (vgl. z.B. Fig. 1) eingreifen und eine seitliche Verschiebung des Sicherungselements 5 in Längsrichtung sowohl im ein- als auch im ausgeschwenkten Zustand verhindern.

Das in Fig. 13 und 14 gezeigte Sicherungselement 5 weist im Bereich des Scharnierabschnitts seitliche Aussparungen 501 auf, in welche im ausgeschwenkten Zustand der Endbereich der erste resp. gingivale Seitenwand 221 eingeführt ist. Entsprechend ist die Rastnase 51 und die Einbuchtung 222 der gingivalen Seitenwand 221 so ausgestaltet, das ein Ausschwenken um ca. 45 Grad möglich ist. Eine seitliche Verschiebung des Sicherungselements 5 wird dabei verhindert und der erste resp. gingivale Drahtbogen 3 kann ohne Schwierigkeiten in die erste resp. gingivale Aufnahmetasche 22 eingelegt werden. Um den Drahtbogen 30 zu sichern wird dann lediglich das Sicherungselement 5 eingeschwenkt.

Optional kann das Sicherungselement, wie in Fig. 13 und Fig. 14 gezeigt eine zweite resp. okklusale Anlagefläche 55 zur Sicherung eines zweiten resp. okklusalen Drahtbogens 30 in der zweiten resp. okklusalen Aufnahmetasche 23 des Aufnahmeelementes 2 aufweisen, so dass im eingeschwenkten Zustand des Sicherungselements 5 ähnlich wie beim voran beschriebenen Drehmomentübertragungselement eine zweite resp. okklusale Führung 7 für den zweiten resp. okklusalen Drahtbogen 30 ausgebildet ist. Ein solches Sicherungselement kann auch verwendet werden, um anstelle eines Drahtes einen Gummifaden, zum Beispiel zum Schliessen von Lücken zwischen Zähnen, in der okklusalen Führung 7 zu sichern.

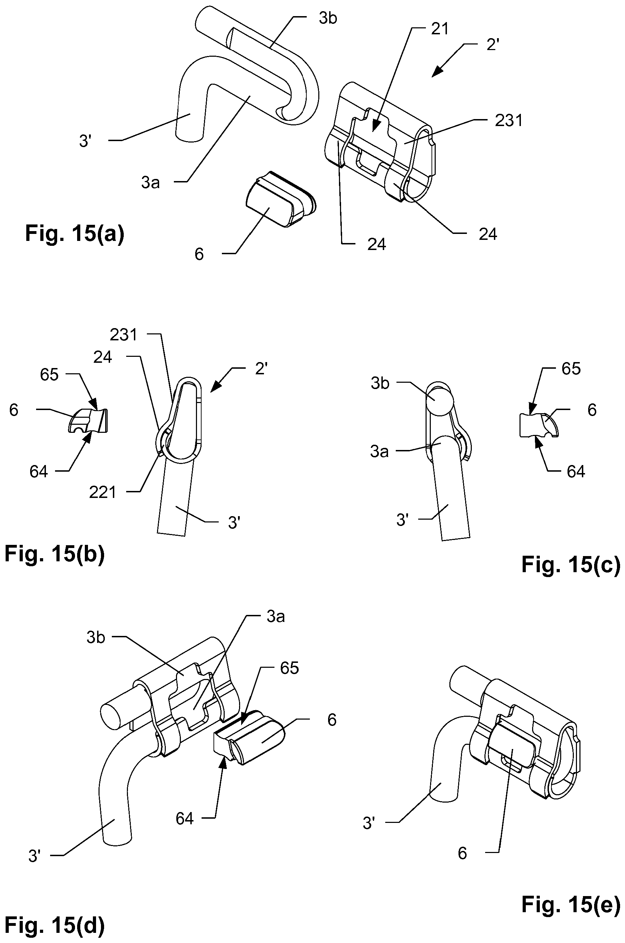

Fig. 15 eine kieferorthopädische Behandlungseinrichtung mit einer Variante des Aufnahmeelements 2 und einer Variante des Sicherungselements 6 zur Ausbildung eines Lingualschlosses für einen Lingualbogen . In den Figuren 15(a) bis (e) ist die Behandlungseinrichtung verschiedene Ansicht und Zuständen gezeigt: unter (a) in einer perspektivischen Explosionsdarstellung, unter (b) in einer Seitenansicht mit eingeschobenem Lingualbogen 3' gesehen entgegen der Einschubrichtung; unter (c) in einer Seitenansicht mit eingeschobenem Lingualbogen 3' gesehen in Einschubrichtung; unter (d) eine perspektivische Ansicht mit eingeschobenem Lingualbogen 3'; und unter (e) eine perspektivische Ansicht mit eingesetztem Sicherungselement 6.

Das Aufnahmeelement 2' unterscheidet sich vom Aufnahmeelement 2 aus Fig. 1 darin, dass der Endbereich der zweite resp. okklusale Seitenwand 231 der zweiten resp. okklusalen Aufnahmetasche 23 beidseitige Verlängerungen 24 in Form einer Lasche aufweist, welche bis zum Endbereich der ersten resp. gingivalen Seitenwand 221 der ersten resp. gingivalen Aufnahmetasche 22 reichen und dort vorzugsweise befestigt sind. Mittig ist nach wie vor die C-förmige Aufnahmeöffnung ausgebildet, in welche das Sicherungselement 6 zur Sicherung des Lingualbogens 3' einsetzbar ist.

Der Lingualbogen 3' weist ein gebogenes Ende mit einem ersten resp. gingivalen Drahtbogenabschnitt 3a und einem zweiten resp. okklusalen Drahtbogenabschnitt 3b auf, welche parallel zueinander verlaufen. Der zweiten resp. okklusale Drahtbogenabschnitt 3b ist vorzugsweise näher am Ende des Lingualbogens angeordnet.

Der Lingualbogen 3' ist mit diesen beiden Drahtbogenabschnitten 3a, 3b seitlich in die Aufnahmeöffnung 21 des Aufnahmeelements 2' einschiebbar. Vorzugsweise ist die erste resp. gingivale Aufnahmetasche 22 grösser als die zweite resp. okklusale Aufnahmetasche 23 ausgestaltet, so dass auch ein relativ dicker Lingualbogen 3' verwendbar ist, der dann lediglich in der Biegung und am zweiten resp. okklusalen Drahtbogenabschnitt 3b leicht abgeschliffen ist, so dass er insgesamt formschlüssig in die beiden Aufnahmetaschen 22, 23 einschiebbar ist (vgl. Fig. 15(a)).

Die beiden Drahtbogenabschnitte 3a, 3b sind derart voneinander beabstandet, dass das Sicherungselement 6 zwischen die beiden Drahtbogenabschnitte 3a, 3b in die Aufnahmeöffnung 21 des Aufnahmeelements 2' einsetzbar ist, so dass es die beiden Drahtbogenabschnitte 3a, 3b festklemmt und gegen seitliches Herausschieben sichert. Dazu weist das Sicherungselement 6 eine ersten resp. gingivale Anlagefläche 64 und eine zweite resp. okklusale Anlagefläche 65 auf.

Um das Sicherungselement 6 in eine in Fig. 1 gezeigtes Aufnahmeelement 2 einzusetzen, kann es ähnlich zu den voran beschriebenen Sicherungselemente eine Rastnase aufweisen, welche in eine Einbuchtung des Aufnahmeelements eingreift.

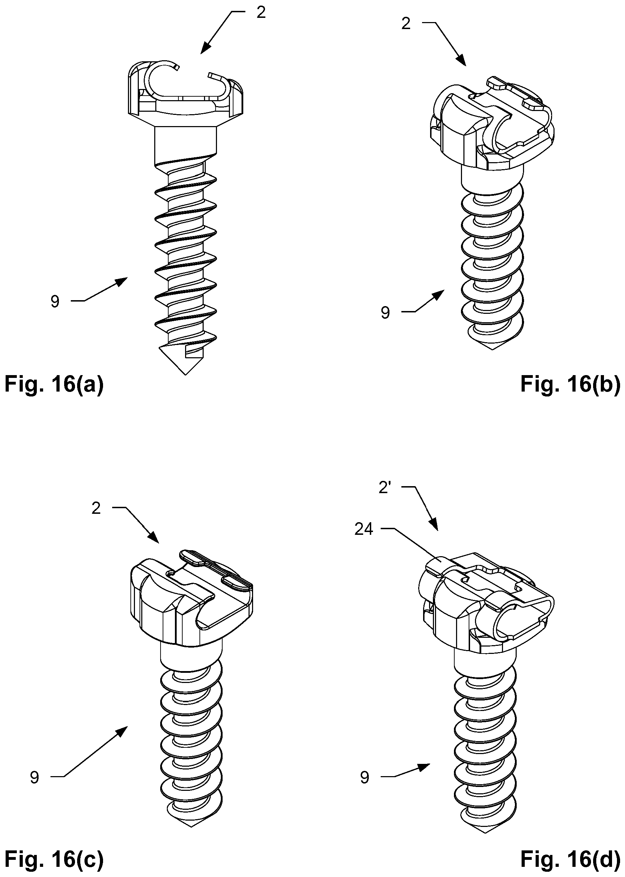

Das Aufnahmeelement 2, 2' mit der C-förmigen Aufnahmeöffnung 21 kann auch als temporäres Knochenimplantat 9 z.B. mit einem Schraubgewinde gestaltet sein, wie in den Figuren 16(a) bis (d) gezeigt. Auch hier gibt es die Möglichkeit, das Aufnahmeelement 2, 2' in seiner einfachsten Form (Fig. 16(a)) zu verwenden oder mit beidseitigen Verlängerungen 24 (Fig. 16(d)). Die Vorteile gegenüber herkömmlichen kieferorthopädischen Implantaten liegen in der geringen Bauhöhe, der allgemeinen Verwendbarkeit für viele verschiedene Zwecke und die problemlose und einfache Montage und Demontage von Drähten oder Apparaturen mit den voran beschriebenen Sicherungselementen 4, 5, 6. Das temporäres Knochenimplantat 9 kann zusammen mit dem Aufnahmeelement einstückig (Fig. 16(c)) oder mehrstückig (Fig. 16(a), (b), (d)) ausgebildet sein.

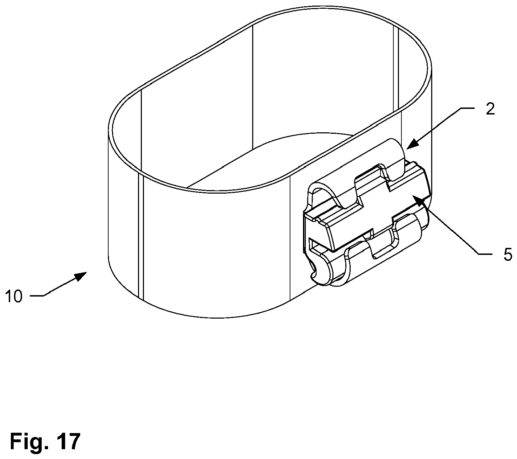

Fig. 17 zeigt ein Band 10 mit einem daran befestigten Aufnahmeelement 2 und einem eingesetzten schwenkbaren Sicherungselement 5.

### Bezeichnungsliste

- 1: Behandlungsapparatur
- 2: Aufnahmeelement, Bracket
- 2': Aufnahmeelement, Lingualschloss
- 20: Basisplatte
- 200: vorderseitige Basisfläche
- 201: rückseitige Befestigungsfläche
- 21: Aufnahmeöffnung
- 22: erste resp. gingivale Aufnahmetasche
- 22a: erste resp. gingivale Innenfläche
- 221: Seitenwand, Endbereich
- 222: Einbuchtung
- 23: zweite resp. okklusale Aufnahmetasche
- 23a: zweite resp. okklusale Innenfläche
- 231: Seitenwand, Endbereich
- 232: Einbuchtung
- 24: Verlängerung
- 3: erster resp. gingivaler Drahtbogen, Runddraht, Flachdraht
- 3': Lingualbogen
- 3a: erster resp. gingivaler Drahtbogenabschnitt
- 3b: zweiter resp. okklusaler Drahtbogenabschnitt
- 30: zweiter resp. okklusaler Drahtbogen, Runddraht
- 30a: zweiter resp. okklusaler Drahtbogenabschnitt
- 31, 31': Kante
- 4: Sicherungselement, Drehmomentelement
- 4': Rohling eines Drehmomentelements
- 40: Bedienöffnung
- 40': Bediengriff
- 41: Rastnase
- 42: gingivaler Absatz
- 421: gingivale Seite
- 43: okklusaler Absatz
- 431: okklusale Seite
- 44: erste resp. gingivale Anlagefläche, Drehmomentübertragungsfläche
- 44a: Drehmomentübertragungsebene
- 44b: Drehmomentübertragungsnut
- 45: zweite resp. okklusale Anlagefläche
- 46: Basisseite, basisseitige Fläche
- 47: Abschrägung
- 5: Sicherungselement (schwenkbar)
- 50: Scharnierabschnitt
- 501: seitliche Aussparung
- 51: Rastnase
- 53: okklusalen Absatz
- 54: erste resp. gingivale Anlagefläche
- 55: zweite resp. okklusale Anlagefläche
- 59: Aussparung
- 6: Sicherungselement für Lingualschloss
- 64: erste resp. gingivale Anlagefläche
- 65: zweite resp. okklusale Anlagefläche
- 7: okklusale Führung für Runddraht
- 8: Zahn
- 9: temporäres Knochenimplantat
- 10: Band
- A: Schwenkachse
- L1: Längsrichtung des Drehmomentelements
- L2: Längsrichtung der Drehmomentübertragungsnut
- α (alpha): Torque-Wert
- β (beta): Angulations-Wert

## Patentansprüche

1. Kieferorthopädische Behandlungseinrichtung umfassend ein am Kiefer eines Patienten befestigbares Aufnahmeelement (2, 2') zur Aufnahme eines gingivalen und eines okklusalen Drahtbogenabschnittes (3a, 30a, 3b) von einem gingivalen respektive okklusalen kieferorthopädischen Drahtbogen (3, 3', 30) und ein Sicherungselement (4, 5, 6) zur Sicherung des gingivalen und okklusalen Drahtbogens (3, 3', 30) im Aufnahmeelement (2, 2'), wobei das Aufnahmeelement (2, 2') eine Basisplatte (20), eine gingivale Aufnahmetasche (22) zur Aufnahme des gingivalen Drahtbogenabschnitts (3a, 3b) und eine okklusale Aufnahmetasche (23) zur Aufnahme des okklusalen Drahtbogenabschnitts (30a) umfasst, die zusammen eine C-förmige Aufnahmeöffnung (21) für das Sicherungselement (4, 5, 6) ausbilden; wobei das Sicherungselement (4, 5, 6) in einem eingesetzten Zustand in der C-förmigen Aufnahmeöffnung (21) gehalten ist; wobei die gingivale Aufnahmetasche (22) sowie die okklusale Aufnahmetasche (23) jeweils eine mit gleichbleibendem Radius gebogene Innenfläche (22a, 23a) aufweisen und der gingivale Drahtbogen (3, 3') im eingesetzten Zustand des Sicherungselements in der gingivalen Aufnahmetasche (22) haltbar und an der gebogenen Innenfläche (22a) der gingivalen Aufnahmetasche (22) anlegbar ist und der okklusale Drahtbogen (30) im eingesetzten Zustand des Sicherungselements in der okklusalen Aufnahmetasche (23) haltbar und an der gebogenen Innenfläche (23a) der okklusalen Aufnahmetasche (22) anlegbar ist; und wobei das Sicherungselement (4, 5, 6) eine auf den gingivalen Drahtbogenabschnitt (3a, 3b) abgestimmte gingivale Anlagefläche (44, 44a, 44b, 54, 64) zur Sicherung des gingivalen Drahtbogens (3, 3') in der gingivalen Aufnahmetasche (22) aufweist.

2. Kieferorthopädische Behandlungseinrichtung nach Anspruch 1, **dadurch gekennzeichnet, dass** das Sicherungselement (4, 5, 6) eine auf einen okklusalen Drahtbogenabschnitt (30a, 3b) abgestimmte okklusale Anlagefläche (45, 55, 65) zur Sicherung des okklusalen Drahtbogens (3, 3', 30) in der okklusalen Aufnahmetasche (23) aufweist.

3. Kieferorthopädische Behandlungseinrichtung nach einem der vorangehenden Ansprüche, **dadurch gekennzeichnet, dass** die gingivale Aufnahmetasche (22) grösser als die okklusale Aufnahmetasche (23) ausgebildet ist.

4. Kieferorthopädische Behandlungseinrichtung nach einem der vorangehenden Ansprüche, **dadurch gekennzeichnet, dass** ein Endbereich einer Seitenwand (221) der gingivalen Aufnahmetasche (22) nach innen zur Basisplatte (20) geneigt ist und/oder ein Endbereich der Seitenwand (231) der okklusalen Aufnahmetasche (23) nach aussen von der Basisplatte (20) weg geneigt ist.

5. Kieferorthopädische Behandlungseinrichtung nach einem der vorangehenden Ansprüche, **dadurch gekennzeichnet, dass** ein Endbereich (231) der okklusalen Aufnahmetasche (23) im Querschnitt gesehen linear ausgestaltet ist, und die Fluchtlinie des Endbereichs (231) in etwa durch einen Scheitelbereich der gingivalen Aufnahmetasche (22) führt.

6. Kieferorthopädische Behandlungseinrichtung nach einem der vorangehenden Ansprüche, **dadurch gekennzeichnet, dass** das Sicherungselement (5) einen gingivalen Scharnierabschnitt (50) aufweist, welcher gelenkig in der gingivalen Aufnahmetasche (22) aufnehmbar ist, so dass das Sicherungselement (5) zwischen einem ausgeschwenkten Zustand und einem eingeschwenkten Zustand hin und her bewegbar ist; wobei die auf den gingivalen Drahtbogenabschnitt (3a) abgestimmte gingivale Anlagefläche (54) als Aussparung (59) im Scharnierabschnitt (50) ausgebildet ist; wobei die Aussparung (59) derart angeordnet ist, dass der Drahtbogen (3) im ausgeschwenkten Zustand des Sicherungselements (5) mit dem Drahtbogenabschnitt (3a) in die Aussparung (59) einlegbar ist, und dass der Drahtbogenabschnitt (3a) im eingeschwenkten Zustand des Sicherungselements (5) zwischen der gingivalen Anlagefläche (54) des Sicherungselements (5) und der Innenfläche (22a) der gingivalen Aufnahmetasche (22) gehalten ist.

7. Kieferorthopädische Behandlungseinrichtung nach einem der Ansprüche 1 bis 6, **dadurch gekennzeichnet, dass** das Sicherungselement (5) einen okklusalen Absatz (53) aufweist, mit welchen das Sicherungselement (5) im eingesetzten Zustand in die okklusale Aufnahmetasche (23) des Aufnahmeelements (2) eingreift.

8. Kieferorthopädische Behandlungseinrichtung nach einem der Ansprüche 1 bis 5, **dadurch gekennzeichnet, dass** das Aufnahmeelement (2) ein an einem Zahn des Patienten befestigbares Bracket ist und dass das Sicherungselement (4) ein Drehmomentelement zur Einstellung eines Drehmoments vom kieferorthopädischen Drahtbogen (3) auf das Bracket respektive den Zahn ist; wobei die Basisplatte (20), die gingivale Aufnahmetasche (22) und die okklusale Aufnahmetasche (23) zusammen die Aufnahmeöffnung (21) für das Drehmomentelement (4) ausbilden; wobei das Drehmomentelement (4) im eingesetzten Zustand verdrehsicher in der Aufnahmeöffnung (21) aufgenommen ist, und wobei die gingivale Anlagefläche eine Drehmomentübertragungsfläche (44, 44a, 44b) zur Ausübung eines Drehmoments vom Drahtbogen (3) auf das Bracket (2) ist, wobei die Drehmomentübertragungsfläche (44, 44a, 44b) derart ausgestaltet und angeordnet ist, dass der im eingesetzten Zustand an der Drehmomentübertragungsfläche (44, 44a, 44b) anliegende Drahtbogen (3) mit einer Kante (31) vorzugsweise zwei nebeneinanderliegenden Kanten (31, 31') auf der gebogenen Innenfläche (22a) der gingivalen Aufnahmetasche (22) oder mit nur einer Seitenfläche auf der Basisplatte (20) verdrehsicher aufliegt.

9. Kieferorthopädische Behandlungseinrichtung nach Anspruch 8, **dadurch gekennzeichnet, dass** das Drehmomentelement (4) einen gingivalen Absatz (42) und einen okklusalen Absatz (43) aufweist, mit welchen das Drehmomentelement (4) im eingesetzten Zustand in die gingivale Aufnahmetasche (22) respektive in die okklusale Aufnahmetasche (23) des Aufnahmeelements (2) eingreift.

10. Kieferorthopädische Behandlungseinrichtung nach Anspruch 8 oder 9, **dadurch gekennzeichnet, dass** die Drehmomentübertragungsfläche (44) in Form einer Drehmomentübertragungsebene (44a) oder Drehmomentübertragungsnut (44b) ausgebildet ist.

11. Kieferorthopädische Behandlungseinrichtung nach einem der Ansprüche 8 bis 10, **dadurch gekennzeichnet, dass** das Drehmomentelement (4) an der okklusalen Seite (431) derart ausgebildet ist, dass im eingesetzten Zustand des Drehmomentelements (4) in der okklusalen Aufnahmetasche (24) eine Führung (7) zur Aufnahme eines Runddrahtes (30) ausbildet ist.

12. Kieferorthopädische Behandlungseinrichtung nach einem der Ansprüche 1 bis 5, **dadurch gekennzeichnet, dass** eine die gingivale Aufnahmetasche (22) bildende Seitenwand (221) oder eine die okklusale Aufnahmetasche (23) bildende Seitenwand (231) des Aufnahmeelements (2') beidseitig eine Verlängerung (24) aufweist, die bis zur gegenüberliegenden Seitenwand (221, 222) der gegenüberliegenden Aufnahmetasche (22, 23) reicht und dort befestigt ist.

13. Kieferorthopädische Behandlungseinrichtung nach einem der vorangehenden Ansprüche, **dadurch gekennzeichnet, dass** eine die gingivale Aufnahmetasche (22) bildende Seitenwand (221) des Aufnahmeelements (2, 2') und/oder eine die okklusale Aufnahmetasche (23) bildende Seitenwand (231) des Aufnahmeelements eine Einbuchtung (231, 232) für eine gingivale und/oder okklusale Rastnase (41, 51) des Sicherungselements (4, 5, 6) umfasst, wobei die Einbuchtung (231, 232) vorzugsweise in Längsrichtung des Aufnahmeelements (2, 2') mittig angeordnet ist.

14. Behandlungsapparatur umfassend mehrere Behandlungseinrichtungen nach einem der vorangehenden Ansprüche und mindestens einen Drahtbogen.

## Claims

1. An orthodontic treatment device comprising a receiving element (2, 2') fastenable on a jaw of a patient for receiving a gingival and an occlusal wire arch portion (3a, 30a, 3b) of a gingival or occlusal orthodontic wire arch (3, 3', 30), respectively, and a securing element (4, 5, 6) for securing the gingival and occlusal wire arch (3, 3', 30) in the receiving element (2, 2'), wherein the receiving element (2, 2') comprises a base plate (20), a gingival receiving pocket (22) for receiving the gingival wire arch portion (3a, 3b) and an occlusal receiving pocket (23) for receiving the occlusal wire arch portion (30a), which together form a C-shaped receiving opening (21) for the securing element (4, 5, 6); wherein the securing element (4, 5, 6), in an inserted state, is being held in the C-shaped receiving opening (21); wherein the gingival receiving pocket (22) as well as the the occlusal receiving pocket (23) each have an inner surface (22a, 23a) which is bent with a constant radius and, when the securing element is in the inserted state, the gingival wire arch (3, 3') is holdable in the gingival receiving pocket (22) and is able to be placed on the bent inner surface (22a) of the gingival receiving pocket (22) and, when the securing element is in the inserted state, the occlusal wire arch (30) is holdable in the occlusal receiving pocket (23) and is able to be placed on the bent inner surface (23a) of the occlusal receiving pocket (22); and wherein the securing element (4, 5, 6) has a gingival contact surface (44, 44a, 44b, 54, 64), adapted to the gingival wire arch portion (3a, 3b), for securing the gingival wire arch (3, 3') in the gingival receiving pocket (22).

2. The orthodontic treatment device according to claim 1, **characterized in that** the securing element (4, 5, 6) has an occlusal contact surface (45, 55, 65) adapted to an occlusal wire arch portion (30a, 3b) for securing the occlusal wire arch (3, 3', 30) in the occlusal receiving pocket (23).

3. The orthodontic treatment device according to any of the aforementioned claims, **characterized in that** the gingival receiving pocket (22) is larger than the occlusal receiving pocket (23).

4. The orthodontic treatment device according to any of the aforementioned claims, **characterized in that** an end region of a side wall (221) of the gingival receiving pocket (22) is inclined inwardly towards the base plate (20) and/or an end region of the side wall (231) of the occlusal receiving pocket (23) is inclined outwardly away from the base plate (20).

5. The orthodontic treatment device according to any one of the aforementioned claims, **characterized in that** an end region (231) of the occlusal receiving pocket (23) is linear in cross-section and the line of alignment of the end region (231) leads approximately through an apex region of the gingival receiving pocket (22).

6. The orthodontic treatment device according to any of the aforementioned claims, **characterized in that** the securing element (5) comprises a gingival hinge portion (50) which is receivable in hinged fashion in the gingival receiving pocket (22) so that the securing element (5) is movable back and forth between a pivoted-out state and a pivoted-in state; wherein the gingival contact surface (54) adapted to the gingival wire arch portion (3a) is formed as a recess (59) in the hinge portion (50); wherein the recess (59) is arranged in such a way that the wire arch (3) can be inserted with the wire arch portion (3a) into the recess (59) when the securing element (5) is in the pivoted-out state, and that the wire arch portion (3a) is held between the gingival contact surface (54) of the securing element (5) and the inner surface (22a) of the gingival receiving pocket (22) when the securing element (5) is in the pivoted-in state.

7. The orthodontic treatment device according to one of claims 1 to 6, **characterized in that** the securing element (5) has an occlusal shoulder (53) with which the securing element (5) engages in the occlusal receiving pocket (23) of the receiving element (2) when in the inserted state.

8. The orthodontic treatment device according to one of claims 1 to 5, **characterized in that** the receiving element (2) is a bracket which can be fastened to a tooth of the patient, and **in that** the securing element (4) is a torque element for setting a torque from the orthodontic wire arch (3) to the bracket or the tooth, respectively; wherein the base plate (20), the gingival receiving pocket (22) and the occlusal receiving pocket (23) together form the receiving opening (21) for the torque element (4); wherein the torque element (4), in the inserted state, is received in the receiving opening (21) in a manner secure against rotation, and wherein the gingival contact surface is a torque transmission surface (44, 44a, 44b) for exerting a torque from the wire arch (3) to the bracket (2), wherein the torque transmission surface (44, 44a, 44b) is designed and arranged in such a way that the wire arch (3), which in the inserted state rests on the torque transmission surface (44, 44a, 44b), rests with one edge (31), preferably two adjacent edges (31, 31'), on the bent inner surface (22a) of the gingival receiving pocket (22) or with only one side surface on the base plate (20) in a manner secure against rotation.

9. The orthodontic treatment device according to claim 8, **characterized in that** the torque element (4) has a gingival shoulder (42) and an occlusal shoulder (43) with which the torque element (4) engages, in the inserted state, in the gingival receiving pocket (22) or in the occlusal receiving pocket (23) of the receiving element (2), respectively.

10. The orthodontic treatment device according to one of claims 8 or 9, **characterized in that** the torque transmission surface (44) is designed in the form of a torque transmission plane (44a) or torque transmission groove (44b).

11. The orthodontic treatment device according to one of claims 8 to 10, **characterized in that** the torque element (4) on the occlusal side (431) is designed in such a way that, when the torque element (4) is in an inserted state, a guide (7) for receiving a round wire (30) is formed in the occlusal receiving pocket (24).

12. The orthodontic treatment device according to one of claims 1 to 5, **characterized in that** a side wall (221) forming the gingival receiving pocket (22) or a side wall (231) of the receiving element (2') forming the occlusal receiving pocket (23) has an extension (24) on both sides, which extends as far as the opposite side wall (221, 222) of the opposite receiving pocket (22, 23) and is fastened there.

13. The orthodontic treatment device according to any of the aforementioned claims, **characterized in that** a side wall (221) of the receiving element (2, 2') forming the gingival receiving pocket (22) and/or a side wall (231) of the receiving element forming the occlusal receiving pocket (23) comprises an indentation (231, 232) for a gingival and/or occlusal detent lug (41, 51) of the securing element (4, 5, 6), wherein the indentation (231, 232) preferably is arranged centrally in the longitudinal direction of the receiving element (2, 2').

14. A treatment apparatus comprising a plurality of the treatment devices according to any of the aforementioned claims and at least one wire arch.

## Revendications

1. Dispositif de traitement orthodontique comprenant un élément de réception (2, 2') configuré pour pouvoir être fixé sur la mâchoire d'un patient dans le but de recevoir un segment de fil métallique gingival et un segment de fil métallique occlusal (3a, 30a, 3b) d'un fil métallique orthodontique respectivement gingival et occlusal (3, 3', 30) et un élément de fixation (4, 5, 6) pour la fixation du fil métallique gingival et du fil métallique occlusal (3, 3', 30) dans l'élément de réception (2, 2'), dans lequel l'élément de réception (2, 2') comprend une plaque de fond (20), une poche de réception gingivale (22) pour recevoir le segment de fil métallique occlusal (3a, 3b) et une poche de réception occlusale (23) pour recevoir le segment de fil métallique occlusal (30a), qui forment ensemble une ouverture de réception en forme de C (21) pour l'élément de fixation (4, 5, 6) ; dans lequel l'élément de fixation (4, 5, 6) est maintenu dans un état inséré dans l'ouverture de réception en forme de C (21) ; dans lequel la poche de réception gingivale (22) ainsi que la poche de réception occlusale (23) présentent chacune une surface intérieure (22a, 23a) courbée avec un rayon constant, et le fil métallique gingival (3, 3') est configuré pour pouvoir être maintenu dans la poche de réception gingivale (22) à l'état inséré de l'élément de fixation et pour pouvoir être appliqué contre la surface intérieure courbée (22a) de la poche de réception gingivale (22) et le fil métallique occlusal (30) est configuré pour pouvoir être maintenu dans la poche de réception occlusale (23) à l'état inséré de l'élément de fixation et pour pouvoir être appliqué contre la surface intérieure courbée (23a) de la poche de réception occlusale (22) ; et dans lequel l'élément de fixation (4, 5, 6) présente une surface d'appui gingival (44, 44a, 44b, 54, 64) adaptée au segment de fil métallique gingival (3a, 3b) pour fixer le fil métallique gingival (3, 3') dans la poche de réception gingivale (22).

2. Dispositif de traitement orthodontique selon la revendication 1, **caractérisé en ce que** l'élément de fixation (4, 5, 6) présente une surface d'appui occlusale (45, 55, 65) adaptée à un segment de fil métallique occlusal (30a, 3b) pour la fixation du fil métallique occlusal (3, 3', 30) dans la poche de réception occlusale (23).

3. Dispositif de traitement orthodontique selon l'une des revendications précédentes, **caractérisé en ce que** la poche de réception gingivale (22) est plus grande que la poche de réception occlusale (23).

4. Dispositif de traitement orthodontique selon l'une des revendications précédentes, **caractérisé en ce qu'**une extrémité d'une paroi latérale (221) de la poche de réception gingivale (22) est inclinée vers l'intérieur en direction de la plaque de fond (20) et/ou qu'une extrémité de la paroi latérale (231) de la poche de réception occlusale (23) est inclinée vers l'extérieur en s'éloignant de la plaque de fond (20).

5. Dispositif de traitement orthodontique selon l'une des revendications précédentes, **caractérisé en ce qu'**une zone d'extrémité (231) de la poche de réception occlusale (23) est linéaire, vue en coupe transversale, et la ligne de fuite de la zone d'extrémité (231) passe approximativement par une zone de sommet de la poche de réception gingivale (22).

6. Dispositif de traitement orthodontique selon l'une des revendications précédentes, **caractérisé en ce que** l'élément de fixation (5) présente un segment de charnière gingival (50) qui est configuré pour pouvoir être reçu de manière articulée dans la poche de réception gingivale (22), de sorte que l'élément de fixation (5) est en mesure de pouvoir être déplacé en va-et-vient entre un état pivoté vers l'extérieur et un état pivoté vers l'intérieur ; dans lequel la surface d'appui gingivale (54) adaptée au segment de fil métallique gingival (3a) est conçue comme un évidement (59) dans le segment de charnière (50); dans lequel l'évidement (59) est disposé de telle sorte que le fil métallique (3) est configuré pour pouvoir être inséré dans l'évidement (59) avec le segment de fil métallique (3a) lorsque l'élément de fixation (5) est à l'état pivoté vers l'extérieur, et que le segment de fil métallique (3a) est maintenu entre la surface d'appui gingivale (54) de l'élément de fixation (5) et la surface intérieure (22a) de la poche de réception gingivale (22) lorsque l'élément de fixation (5) est à l'état pivoté vers l'intérieur.

7. Dispositif de traitement orthodontique selon l'une des revendications 1 à 6, **caractérisé en ce que** l'élément de fixation (5) présente un rebord occlusal (53) par lequel l'élément de fixation (5) s'engage, à l'état inséré, dans la poche de réception occlusale (23) de l'élément de réception (2).

8. Dispositif de traitement orthodontique selon l'une des revendications 1 à 5, **caractérisé en ce que** l'élément de réception (2) est un support configuré pour pouvoir être fixé sur une dent du patient, et **en ce que** l'élément de fixation (4) est un élément de couple de rotation pour le réglage d'un couple de rotation du fil métallique orthodontique (3) sur le support, respectivement sur la dent ; dans lequel la plaque de fond (20), la poche de réception gingivale (22) et la poche de réception occlusale (23) forment ensemble l'ouverture de réception (21) pour l'élément de couple de rotation (4) ; dans lequel l'élément de couple (4), à l'état inséré, est reçu dans l'ouverture de réception (21) sans pouvoir tourner, et dans lequel la surface d'appui gingivale est une surface de transmission de couple (44, 44a, 44b) pour exercer un couple de rotation du fil métallique (3) sur le support (2), dans lequel la surface de transmission de couple (44, 44a, 44b) est conçue et disposée de telle sorte, que le fil métallique (3) reposant à l'état inséré sur la surface de transmission du couple (44, 44a, 44b) repose avec un bord (31), de préférence deux bords (31, 31') juxtaposés, sur la surface intérieure incurvée (22a) de la poche de réception gingivale (22) ou avec seulement une surface latérale sur la plaque de fond (20) sans pouvoir tourner.

9. Dispositif de traitement orthodontique selon la revendication 8, **caractérisé en ce que** l'élément de couple (4) présente un rebord gingival (42) et un rebord occlusal (43) par lesquels l'élément de couple (4) s'engage, à l'état inséré, dans la poche de réception gingivale (22), respectivement dans la poche de réception occlusale (23) de l'élément de réception (2).

10. Dispositif de traitement orthodontique selon la revendication 8 ou 9, **caractérisé en ce que** la surface de transmission de couple (44) est réalisée sous la forme d'un plan de transmission de couple (44a) ou d'une rainure de transmission de couple (44b).

11. Dispositif de traitement orthodontique selon l'une des revendications 8 à 10, **caractérisé en ce que** l'élément de couple (4) est réalisé sur le côté occlusal (431) de telle sorte que, lorsque l'élément de couple (4) est en place, un guide (7) destiné à recevoir un fil métallique rond (30) est formé dans la poche de réception occlusale (24).

12. Dispositif de traitement orthodontique selon l'une des revendications 1 à 5, **caractérisé en ce qu'**une paroi latérale (221) formant la poche de réception gingivale (22) ou une paroi latérale (231) formant la poche de réception occlusale (23) de l'élément de réception (2') présente des deux côtés un prolongement (24) qui s'étend jusqu'à la paroi latérale opposée (221, 222) de la poche de réception opposée (22, 23) et y est fixé.

13. Dispositif de traitement orthodontique selon l'une des revendications précédentes, **caractérisé en ce qu'**une paroi latérale (221) de l'élément de réception (2, 2') formant la poche de réception gingivale (22) et/ou qu'une paroi latérale (231) de l'élément de réception formant la poche de réception occlusale (23) présentent une indentation (231, 232) pour un cran d'encliquetage gingival et/ou occlusal (41, 51) de l'élément de fixation (4, 5, 6), dans lequel l'indentation (231, 232) est de préférence disposée au centre dans la direction longitudinale de l'élément de réception (2, 2').

14. Appareil de traitement comprenant plusieurs dispositifs de traitement selon l'une des revendications précédentes et au moins un fil métallique.
